# EUROPÄISCHE PATENTSCHRIFT

(11) **EP 0 460 407 B1**
(45) Veröffentlichungstag und Bekanntmachung des Hinweises auf die Patenterteilung: **29.11.1995**
(21) Anmeldenummer: 91107258.5
(22) Anmeldetag: 04.05.1991
(51) Int. Cl.: G01D 5/14

(54) **Sensorschaltung**
Sensor circuit
Circuit pour capteur

(30) Priorität: 02.06.1990 DE 4017843
(43) Veröffentlichungstag der Anmeldung: 11.12.1991
(73) Patentinhaber: ROBERT BOSCH GMBH, 70442 Stuttgart (DE)
(72) Erfinder: Romes, Roman, W-7251 Friolzheim (DE)

(56) Entgegenhaltungen:
- DE-B- 2 428 145
- GB-A- 1 293 379
- SOVIET INVENTIONS ILLUSTRATED, EL Sektion, Woche 8539, 6. November 1985, Derwent Publications Ltd., London, GB & SU-1146545

## Beschreibung

Die Erfindung betrifft eine Sensorschaltung mit einer Meßschaltung, die ein von einer variablen Größe abhängiges Signal ausgibt, und mit einer Auswerteschaltung, die dazu dient, das von der Meßschaltung ausgegebene Signal z. B. zu glätten oder zu verstärken.

### Stand der Technik

Innerhalb von Sensorschaltungen sind als Meßschaltungen insbesondere sogenannte Differenzmeßschaltungen von Bedeutung. Es handelt sich hierbei um Meßschaltungen, in denen Meßspannungen an zwei unterschiedlichen Schaltungspunkten auftreten, wobei sich die Signale am einen Punkt gegensinnig zu den Signalen am anderen Punkt bei Änderungen der Meßgröße ändern. Die üblichsten derartigen Meßschaltungen sind sämtliche Ausführungsformen von Brückenschaltungen. Weitere Beispiele sind sogenannte Differenz-Trafoweggeber und Differenz-Drosselweggeber. Der entscheidende Trick bei den bekannten Differenzmeßschaltungen liegt darin, daß die Differenz zwischen den genannten zwei Meßspannungen gebildet wird. Hierdurch wird ein Signal gewonnen, dessen Änderung bei einer vorgegebenen Änderung der Meßgröße doppelt so groß ist wie die Änderung nur einer der beiden Meßspannungen für sich. Dadurch wird das Signal/Rausch-Verhältnis verbessert. Weiterhin werden Nichtlinearitäten und Temperaturgänge der einzelnen Meßspannungen durch die Differenzbildung weitgehend aufgehoben.

Wegen der eben genannten Vorteile werden herkömmliche Differenzmeßschaltungen regelmäßig dort eingesetzt, wo es auf zuverlässige und genaue Messung ankommt. Bei solchen Anwendungsfällen ist es häufig von Bedeutung, die Funktionsfähigkeit der Sensorschaltung, innerhalb der die Differenzmeßschaltung angeordnet ist, zu überwachen. Dies erfolgt durch doppelte Ausführung der Sensorschaltung und durch Vergleichen der von den beiden Sensoren ausgegebenen Sensorsignalen miteinander. Sind die Signale unplausibel zueinander, wird ein Fehlersignal ausgegeben.

Es bestand bei solchen Sensorschaltungen der überall in der Technik entsprechend vorhandene Wunsch, zu möglichst einfachen und dennoch zuverlässigen Anordnungen zu gelangen.

### Darstellung der Erfindung

Die erfindungsgemäße Sensorschaltung weist folgende Merkmale auf:
- eine Meßschaltung, in der Meßspannungen an zwei unterschiedlichen Schaltungspunkten auftreten, wobei sich die Signale am einen Punkt gegensinnig zu den Signalen am anderen Punkt bei Änderungen der Meßgröße ändern, welche Meßschaltung die Signale von den beiden genannten Punkten getrennt ausgibt,
- und eine Auswerteschaltung, die
   -- die beiden Sensorsignale empfängt und die Differenz aus diesen Signalen bildet,
   -- und zur Funktionskontrolle der Sensorschaltung überprüft, ob sich die Signale tatsächlich, innerhalb vorgegebener Fehlergrenzen immer gegensinnig zueinander ändern.

Bei der erfindungsgemäßen Sensorschaltung wird also zwar eine Meßschaltung verwendet, die sich gegensinnig ändernde Meßspannungen ausgibt, jedoch ist die Meßspannung nicht als vollständige Differenzschaltung ausgeführt, die die Differenz der genannten Meßspannungen ausgibt, sondern sie liefert die Meßspannungen getrennt an die Auswerteschaltung, die durch dieses getrennte Zuliefern die Möglichkeit erhält, überprüfen zu können, ob sich die beiden Spannungen tatsächlich immer gegensinnig zueinander ändern. Das als Sensorsignal letztendlich erwünschte Differenzsignal wird von der Auswerteschaltung statt von der Meßschaltung gebildet.

Die Tatsache, daß sich die beiden Meßspannungen immer gegensinnig zueinander ändern müssen, hat u. a. zwingend zur Folge, daß die Summe der beiden Spannungen konstant sein muß. Dadurch läßt sich z. B. auch sehr leicht überprüfen, ob die Spannungsversorgung der Sensorschaltung noch ordnungsgemäß arbeitet. Wenn die Plausibilitätskontrolle weit hinten im Signalablauf innerhalb der Auswerteschaltung erfolgt, läßt sich außerdem fast die gesamte Auswerteschaltung auf ihre Funktionskontrolle hin überprüfen. So ist es von Vorteil, die Plausibilitätskontrolle erst mit den einzelnen Meßsignalen auszuführen, wenn sie bereits gefiltert und verstärkt sind, falls derartige Maßnahmen erforderlich sind.

Bei der erfindungsgemäßen Sensorschaltung werden also zwei innerhalb der Meßschaltung auftretende Signale zur Fehlerkontrolle benutzt. Dadurch ist es nicht mehr erforderlich, mit einer zweiten Sensorschaltung dieselbe Meßgröße zu erfassen, um eine Plausibilitätskontrolle ausführen zu müssen.

Es ist von Vorteil, die Funktionskontrolle innerhalb der Auswerteschaltung mit digitalen Maßnahmen vorzunehmen, da es dabei möglich ist, ohne großen Schaltungsaufwand viele Fehler zu unterscheiden. Vorzugsweise wird in einem solchen Fall eine Meßbereichstabelle innerhalb der Auswerteschaltung verwendet, welche Meßtabelle zu Werten des einen der beiden Meßsignale zulässige Wertebereiche des anderen Meßsignales speichert. Mit einem (logisch ausgeführten) Komparatormittel wird verglichen, ob der aktuelle Wert des anderen Meßsignales innerhalb den Wertebereich fällt, der aufgrund des aktuellen Wertes des anderen Meßsignales aus der Tabelle ausgelesen wurde.

### Zeichnung

Fig. 1 Blockschaltbild einer Sensorschaltung mit einer Meßschaltung, die zwei sich gegensinnig ändernde Meßsignale ausgibt, aufgrund derer in einer Auswerteschaltung eine Fehlerkontrolle erfolgt;
Fig. 2 Blockschaltbild einer als Differenz-Trafoweggeber ausgeführten Meßschaltung für die Sensorschaltung gemäß Fig. 1;
Fig. 3 Schaltbild einer als Brückenschaltung ausgeführten Meßschaltung für die Sensorschaltung gemäß Fig. 1; und
Fig. 4 Blockschaltbild einer bekannten Sensorschaltung mit einer Differenzmeßschaltung und einer Auswerteschaltung ohne Fehlerkontrolle.

### Beschreibung von Ausführungsbeispielen

Durch Fig. 4 ist eine bekannte Sensorschaltung mit Differenz-Meßschaltung und Auswerteschaltung veranschaulicht. Innerhalb der Differenzmeßschaltung treten zwei Spannungen U1 und U2 auf, die sich gegensinnig ändern. Innerhalb der Differenz-Meßschaltung wird das Differenzsignal U1 - U2 gebildet und dieses wird an die Auswerteschaltung ausgegeben. Innerhalb dieser sind bei der Darstellung gemäß Fig. 4 ein Filter und ein Verstärker eingezeichnet. Das gefilterte und verstärkte Differenzsignal wird als Sensorspannung US ausgegeben.

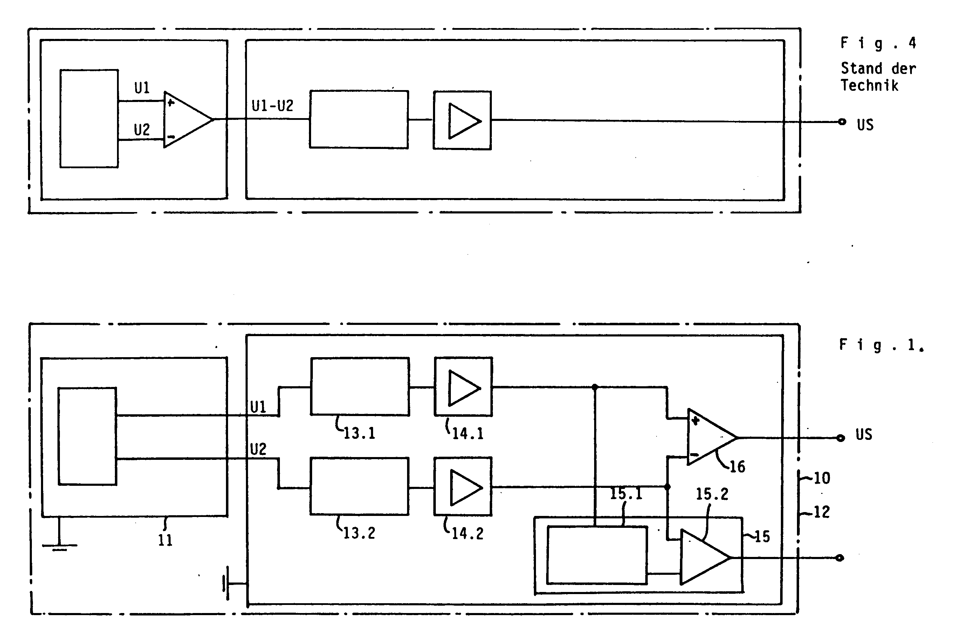

Die Sensorschaltung 10 gemäß Fig. 1 verfügt über eine Meßschaltung 11 , innerhalb der an zwei unterschiedlichen Schaltungspunkten sich gegensinnig ändernde Meßspannungen U1 und U2 auftreten. Diese Meßschaltung ist jedoch nicht als Differenzmeßschaltung ausgeführt, da sie nicht das Differenzsignal U1 - U2 ausgibt, sondern die beiden Meßspannungen U1 und U2 getrennt an eine Auswerteschaltung 12 liefert. Innerhalb der Auswerteschaltung 12 werden die beiden Meßsignale getrennt durch Filter 13.1 bzw. 13.2 geglättet und durch Verstärker 14.1 bzw. 14.2 verstärkt. Die geglätteten und verstärkten Meßsignale werden einem Fehlererkennungsmittel 15 und einem Differenzverstärker 16 zugeführt, der die Differenz der beiden Meßsignale bildet und diese Differenz als Sensorsignal US ausgibt.

Das Fehlererkennungsmittel 15 verfügt über eine Meßbereichstabelle 15.1 und ein Komparatormittel 15.2, das durch ein Programm realisiert ist. In die Meßbereichstabelle 15.1 wird der jeweils aktuelle Meßwert des einen Meßsignales eingegeben. Die Meßbereichstabelle gibt dann einen zulässigen Wertebereich für das andere Meßsignal aus. Im Komparatormittel 15.2 wird überprüft, ob das andere Meßsignal in den ausgelesenen Wertebereich fällt. Ist dies nicht der Fall, wird ein Fehlersignal ausgegeben, das anzeigt, daß die Sensorschaltung nicht ordnungsgemäß arbeitet.

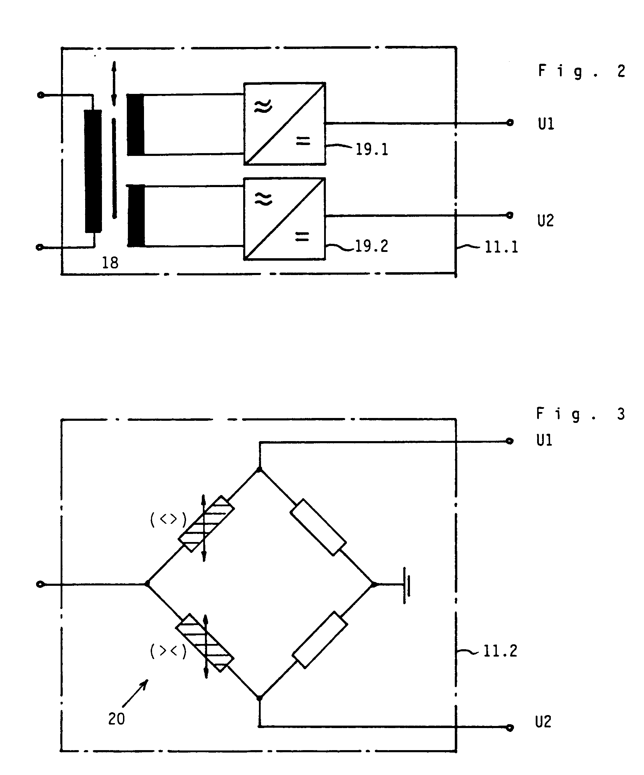

Fig. 2 zeigt das Blockschaltbild einer Meßschaltung 11.1 zum Erfassen von Signalen von einem Differenz-Trafoweggeber 18. Die beiden Sekundärwicklungen des Weggebers sind nicht so geschaltet, daß an ihnen nur ein Differenzsignal U1 - U2 abgegriffen werden kann, wie dies herkömmlicherweise üblich ist, sondern er ist so ausgebildet, daß diese beiden Spannungen getrennt herausgeführt werden können. Ausgegeben werden dabei gleichgerichtete Spannungen U1 und U2, nachdem die von den Sekundärwicklungen abgegriffenen Spannungen in Gleichrichtern 19.1 bzw. 19.2 gleichgerichtet wurden.

Fig. 3 zeigt eine Meßschaltung 11.2, die als Brückenschaltung 20 ausgebildet ist. Auch hier ist wesentlich, daß die an zwei gegenüberliegenden Brückenpunkten auftretenden, sich gegensinnig ändernden Spannungen U1 und U2 getrennt ausgegeben werden. In der Schaltung sind die beiden Elemente in den linken Brückenzweigen als variable Elemente dargestellt. Es kann sich um kapazitive Elemente, z. B. Drehkondensatoren, um induktive Elemente oder um Widerstände handeln. Insbesondere wenn Widerstände vorhanden sind, können die Elemente in allen vier Brückenzweigen variabel sein. Es handelt sich hierbei um übliche Anordnungen. Wesentlich ist nur, daß nicht innerhalb der Meßschaltung die Differenz der Spannungen U1 und U2 gebildet wird, sondern daß diese beiden Spannungen getrennt an die Auswerteschaltung 12 gemäß Fig. 1 geliefert werden. Die variablen Elemente sind so zu schalten, daß sich die vom einen Element ausgegebene Spannung erhöht, wenn sich die vom anderen Element erniedrigt (z.B. Schaltung als Zug- bzw. Drucksensor), und umgekehrt, was in Fig. 3 durch (<>) und (><) angedeutet ist.

Es sei darauf hingewiesen, daß in der Sensorschaltung gemäß Fig. 1 nur drei Merkmale wesentlich sind, nämlich:
- sich gegensinnig ändernde Meßspannungen U1 und U2 werden gesondert von der Meßschaltung an die Auswerteschaltung ausgegeben,
- die Auswerteschaltung führt eine Funktionskontrolle mit Hilfe des (logisch mit einem Programm arbeitenden) Fehlererkennungsmittels aus, und
- die Auswerteschaltung bildet auf Grundlage der Differenz der beiden von der Meßschaltung ausgegebenen Meßsignale U1 und U2 ein Sensorsignal US.

Unwesentlich ist, ob ein Filtern und/oder ein Verstärken der Meßsignale oder andere signalformende Maßnahmen an den Meßsignalen auszuführen sind und ob solche Maßnahmen innerhalb der Meßschaltung oder innerhalb der Auswerteschaltung ausgeführt werden.

## Patentansprüche

1. Sensorschaltung (10) mit
- einer Meßschaltung (11), in der Meßsignale an zwei unterschiedlichen Schaltungspunkten auftreten, wobei sich die Signale am einen Punkt gegensinnig zu den Signalen am anderen Punkt bei Änderungen der Meßgröße ändern,
- und einer Auswerteschaltung (12) zum Auswerten der Meßsignale und zum Ausgeben eines Sensorsignals (US),
**dadurch gekennzeichnet**, daß
- die Meßschaltung (11, 11.1, 11.2) die Signale von den beiden genannten Punkten getrennt an die Auswerteschaltung (12) ausgibt,
- und die Auswerteschaltung so ausgebildet ist, daß sie
-- die Differenz der beiden Meßsignale (U1, U2) bildet,
-- und zur Funktionskontrolle der Sensorschaltung überprüft, ob sich die Meßsignale tatsächlich, innerhalb vorgegebener Fehlergrenzen, immer gegensinnig zueinander ändern.

2. Sensorschaltung nach Anspruch 1, **gekennzeichnet durch** eine Meßbereichstabelle (15.1), innerhalb der Auswerteschaltung (12), welche Meßtabelle zu Werten des einen der beiden Meßsignale zulässige Wertebereiche des anderen Meßsignales speichert, und ein Komparatormittel (15.2), das vergleicht, ob der aktuelle Wert des anderen Meßsignals innerhalb den Wertebereich fällt, der aufgrund des aktuellen Wertes des einen Meßsignales aus der Tabelle ausgelesen wurde.

3. Sensorschaltung nach einem der Ansprüche 1 oder 2, **dadurch gekennzeichnet**, daß die Meßschaltung (11.1) einen Differenz-Trafoweggeber (18) aufweist.

4. Sensorschaltung nach einem der Ansprüche 1 oder 2, **dadurch gekennzeichnet**, daß die Meßschaltung (11.2) eine Brückenschaltung (20) aufweist.

## Claims

1. Sensor circuit (10) having
- a measurement circuit (11) in which measurement signals occur at two different circuit points, the signals at one point changing in the opposite sense to the signals at the other point during changes of the measured variable,
- and an evaluation circuit (12) to evaluate the measurement signals and to output a sensor signal (US),
characterized in that
- the measurement circuit (11, 11.1, 11.2) outputs the signals from the two said points separately to the evaluation circuit (12),
- and the evaluation circuit is designed such that it
-- forms the difference between the two measurement signals (U1, U2),
-- and, for the functional monitoring of the sensor circuit, checks whether the measurement signals always actually change in the opposite sense to each other within prescribed error limits.

2. Sensor circuit according to Claim 1, characterized by a measurement range table (15.1), within the evaluation circuit (12), which measurement table stores, against values of one of the two measurement signals, permissible value ranges of the other measurement signal, and a comparator means (15.2) which compares whether the current value of the other measurement signal falls within the value range which was read from the table on the basis of the current value of the one measurement signal.

3. Sensor circuit according to one of Claims 1 and 2, characterized in that the measurement circuit (11.1) has a differential transformer displacement transducer (18).

4. Sensor circuit according to one of Claims 1 and 2, characterized in that the measurement circuit (11.2) has a bridge circuit (20).

## Revendications

1. Circuit de capteur (10) comprenant:
- un circuit de mesure (11) dans lequel les signaux de mesure apparaissent en deux points différents du circuit, les signaux en un point variant en sens opposé des signaux à l'autre point pour la grandeur de mesure,
- et l'un des circuits d'exploitation (12) exploite les signaux de mesure et fournit un signal de capteur (US),
caractérisé en ce que,
- le circuit de mesure (11, 11.1, 11.2) émet séparément les deux signaux pour le circuit d'exploitation (12),
- et le circuit d'exploitation :
- forme la différence des deux signaux de mesure (U1, U2),
- vérifie par un contrôle de fonctionnement du circuit de capteur si les signaux de mesure varient effectivement dans les limites d'erreurs prédéterminées, et cela toujours en sens opposé.

2. Circuit de capteur selon la revendication 1, caractérisé en ce qu'un tableau de plages de mesures (15.1) du circuit d'exploitation (12) contient les plages de valeurs de mesures autorisées pour exploiter l'un des deux signaux de mesure et un moyen de comparaison (15.2) vérifie si la valeur instantanée de l'autre signal de mesure tombe dans la plage de valeurs fournie à partir du tableau en fonction de la valeur instantanée de l'autre signal de mesure.

3. Circuit de capteur selon l'une des revendications 1 ou 2, caractérisé en ce que le circuit de mesure (11.1) comporte un capteur de course de transformateur de différence (18).

4. Circuit de capteur selon l'une des revendications 1 ou 2, caractérisé en ce que le circuit de mesure (11.2) comprend un montage en pont (20).
